# EUROPEAN PATENT APPLICATION

(11) **EP 0 913 231 A1**
(43) Date of publication of application: **06.05.1999**
(21) Application number: 97902660.6
(22) Date of filing: 12.02.1997
(51) Int. Cl.: B24B 9/10

(54) **APPARATUS FOR MACHINING GLASS SHEETS**

(71) Applicant: BANDO KIKO CO. LTD., Tokushima-shi Tokushima-ken 770 (JP)
(72) Inventor: BANDO, Shigeru, Tokushima-shi Tokushima 770 (JP)
(74) Representative: Leeming, John Gerard
(86) International application number: JP9700364
(87) International publication number: WO9835783

(57) **Abstract**

A glass-plate working apparatus (1) is provided with a glass plate carrying-in section (2); a glass plate bend-breaking section (3) disposed in proximity to the glass plate carrying-in section (2); a glass plate peripheral-edge grinding section (4) disposed in proximity to the glass plate bend-breaking section (3); and a glass plate carrying-out section (5) disposed in proximity to the glass plate peripheral-edge grinding section (4). The glass plate bend-breaking section (3) is provided with a bend-breaking head moving device (12a) for relatively moving a bend-breaking head device (11a) with respect to a glass plate (6) in correspondence with a cut line (8) for bend-breaking to be formed as well as a predetermined position (10) on the glass plate to be pressed. The glass plate peripheral-edge grinding section (4) is provided with a grinding-head moving device (16) for relatively moving a grinding head device (15) with respect to the glass plate (6) in correspondence with a bend-broken edge (14) of the glass plate (6) to be ground. The bend-breaking head moving device (12a) is provided with an X-direction linear motor means (70) and a Y-direction linear motor means (71). The grinding-head moving device (16) is provided with an X-direction linear motor means (121) and a Y-direction linear motor means (123).

## Description

### TECHNICAL FIELD

The present invention relates to a glass-plate working apparatus for manufacturing, for example, window glass for an automobile, such as a front window, a side window, and a rear window, panes for buildings, and other glass plates of predetermined configurations by bend-breaking unworked plate glass into a given configuration and by grinding a bend-broken edge of the bend-broken glass plate.

### BACKGROUND ART

In a conventional glass-plate working apparatus of this type, a glass-plate carrying-in section and a main cut-line forming section in proximity to the glass-plate carrying-in section are disposed. In this main cut-line forming section, a given main cut line for bend-breaking is formed on unworked plate glass, and then the unworked plate glass on which the main cut line for bend-breaking has been formed is transported to a glass plate bend-breaking section which is disposed in proximity to the main cut-line forming section. In the glass plate bend-breaking section, an edge cut line is formed on the unworked plate glass on which the main cut line has been formed. Subsequently, the unworked plate glass on which the main cut line and the edge cut line have been formed is subjected to bend-breaking. The bend-broken edge of the bend-broken glass plate is ground in a glass plate peripheral-edge grinding section which is disposed in proximity to the glass-plate bend-breaking section.

In addition, such a glass-plate working apparatus is generally provided with, among others, a bend-breaking head device for bend-breaking a glass plate by forming a cut line for bend-breaking on the glass plate and by pressing a predetermined position on the glass plate with the cut line formed thereon; a moving device for moving the bend-breaking head device; a grinding head device for grinding a bend-broken edge of the glass plate, and a moving device for moving the grinding head device. Each of these moving devices, e.g., the moving device for moving the bend-breaking head device, is conventionally provided with a screw shaft which is threadedly engaged with a movable base with the bend-breaking head device mounted thereon, as well as an electric motor for rotating the screw shaft. As the screw shaft is rotated by the operation of the electric motor, the movable base threadedly engaged with the screw shaft is moved, thereby moving the bend-breaking head device in a similar manner.

In a case where the moving device is arranged by the electric motor and the screw shaft which is rotated by the same, in order to make it possible for a large glass plate to be worked at high speed, an arrangement is provided such that an elongated screw shaft is provided and is rotated at high speed. However, if the elongated screw shaft is rotated at high speed, the screw shaft is deflected and vibrates, which makes it difficult to allow the movable base with the bend-breaking head device mounted thereon to be disposed accurately at a desired position, making it impossible to manufacture a glass plate of a configuration as programmed.

Therefore, if an attempt is made to avoid the deflection and vibrations of the screw shaft during its high-speed rotation by lowering a point of its mechanical resonance by, for example, enlarging the diameter of the screw shaft, the weight of the screw shaft increases, so that a new problem arises in that the response characteristic deteriorates.

The present invention has been devised in view of the above-described aspects, and its object is to provide a glass-plate working apparatus which is capable of overcoming the above-described problems, and which makes it possible to manufacture a glass plate of a configuration as programmed and excels in the response characteristic.

Another object of the present invention is to provide a glass-plate working apparatus which is capable of fabricating glass plates of given configurations with high productivity.

Still another object of the present invention is to provide a glass-plate working apparatus which is capable of forming a main cut line and an edge cut line, as desired, and of working glass plates having aimed configurations with high accuracy.

### DISCLOSURE OF THE INVENTION

In accordance with the present invention, the above objects are attained by a glass-plate working apparatus comprising: a glass plate bend-breaking section to which a glass subject to bend-breaking is supplied, wherein the glass plate bend-breaking section is provided with a supporting device for supporting the glass plate supplied; at least a pair of bend-breaking head devices for forming a cut line for bend-breaking on the glass plate supported by the supporting device, and for pressing a predetermined position on the glass plate on which the cut line has been formed, so as to bend-break the glass plate; and a bend-breaking head moving device for relatively moving each the bend-breaking head device with respect to the glass plate supported by the supporting device, in correspondence with the cut line for bend-breaking to be formed as well as the predetermined position on the glass plate to be pressed, and wherein the bend-breaking head moving device is provided with X-direction linear motor means for a bend-breaking head device for moving each the bend-breaking head device in an X direction and Y-direction linear motor means for a bend-breaking head device for moving each the bend-breaking head device in a Y direction.

In addition, in accordance with the present invention, the above objects are also attained by a glass-plate working apparatus comprising: a glass plate carrying-in section; a glass plate bend-breaking section disposed in proximity to the glass plate carrying-in section; a glass plate peripheral-edge grinding section disposed in proximity to the glass plate bend-breaking section; and a glass plate carrying-out section disposed in proximity to the glass plate peripheral-edge grinding section, wherein the glass plate bend-breaking section is provided with a supporting device for supporting a glass plate from the glass plate carrying-in section; at least one bend-breaking head device for forming a cut line for bend-breaking on the glass plate supported by the supporting device, and for pressing a predetermined position on the glass plate on which the cut line has been formed, so as to bend-break the glass plate; and a bend-breaking head moving device for relatively moving the bend-breaking head device with respect to the glass plate supported by the supporting device, in correspondence with the cut line for bend-breaking to be formed as well as the predetermined position on the glass plate to be pressed, wherein the glass plate peripheral-edge grinding section is provided with a supporting device for supporting the glass plate from the glass plate bend-breading section; at least one grinding head device for grinding a bend-broken edge of the glass plate supported by the supporting device of the glass plate peripheral-edge grinding section; and a grinding-head moving device for relatively moving the grinding head device with respect to the glass plate supported by the supporting device of the glass plate peripheral-edge grinding section, in correspondence with the bend-broken edge of the glass plate to be ground, wherein the bend-breaking head moving device is provided with X-direction linear motor means for a bend-breaking head device for moving the bend-breaking head device in an X direction and Y-direction linear motor means for a bend-breaking head device for moving the bend-breaking head device in a Y direction, and wherein the grinding-head moving device is provided with X-direction linear motor means for a grinding head device for moving the grinding head device in the X direction and Y-direction linear motor means for a grinding head device for moving the grinding head device in the Y direction.

In the present invention, the glass-plate working apparatus may further comprise: a transporting device for transporting the glass plate from the glass plate carrying-in section to the supporting device of the glass plate bend-breaking section, from the supporting device of the glass plate bend-breaking section to the supporting device of the glass plate peripheral-edge grinding section, and from the supporting device of the glass plate peripheral-edge grinding section to the glass plate carrying-out section, respectively. In this case, the transporting device may be provided with lifting devices for lifting the glass plate from respective the supporting devices of the glass plate carrying-in section, the glass plate bend-breaking section, and the glass plate peripheral-edge grinding section, as well as linear motor means for moving a movable base on which each lifting device is mounted.

In a preferred embodiment, the supporting device of the glass plate bend-breaking section is provided with a flexible endless belt, a supporting member for supporting the flexible endless belt on the reverse surface thereof, and a traveling device for causing the endless belt to travel, and the bend-breaking head device is provided with a cutter device for forming a main cut line and an edge cut line, as well as a press-breaking device for press-breaking the glass plate.

Further, in a preferred example in accordance with the present invention, the X-direction linear motor means for a bend-breaking head device is provided with an X-direction linear motor for moving in the X direction a movable base with the bend-breaking head device mounted thereon, and the Y-direction linear motor means for a bend-breaking head device is provided with a pair of Y-direction linear motors which are respectively disposed at opposite ends of a movable base with the X-direction linear motor mounted thereon, the pair of Y-direction linear motors being arranged to be operated in synchronism with each other. In addition, the X-direction linear motor means for a grinding head device is provided with an X-direction linear motor for moving in the X direction a movable base with the grinding head device mounted thereon, and the Y-direction linear motor means for a grinding head device is provided with a pair of Y-direction linear motors which are respectively disposed at opposite ends of a movable base with the X-direction linear motor mounted thereon, the pair of Y-direction linear motors being arranged to be operated in synchronism with each other.

The glass-plate working apparatus in accordance with the present invention may be structured such that one of the bend-breaking head devices is arranged to cut a main cut line, and both bend-breaking head devices are arranged to form edge cut lines and bend-break the glass plate on which the main cut line and the edge cut lines have been formed.

The linear motor means in the present invention may be constituted by a so-called linear motor which is provided with a stator and a movable element which moves rectilinearly by magnetically acting therewith. Alternatively, the linear motor means may be constituted by a mechanism combining a screw shaft and a nut wherein a screw shaft having both ends fixed, preferably a ball screw shaft, and a rotatable nut threadedly engaged with the screw shaft, preferably a ball nut, are provided, and the nut itself is made to move rectilinearly by the rotation of the nut. Still further, the linear motor means may be constituted by another mechanism.

In the glass-plate working apparatus in accordance with the present invention, an unworked plate glass subject to bend-breaking is placed and supported on the supporting device of the glass plate bend-breaking section. Next, while the bend-breaking head moving device is being operated to relatively move the bend-breaking head device with respect to the glass plate supported on the glass-plate supporting device, a main cut line for bend-breaking is formed and an edge cut line is also formed on the glass plate supported on the supporting device by the bend-breaking head device. A predetermined position of the glass plate with the cut lines formed thereon is pressed, thereby bend-breaking the glass plate. This bend-broken glass plate is placed and supported on the supporting device of the glass plate peripheral-edge grinding section, and while the grinding-head moving device is being operated to relatively move the grinding head device with respect to the glass plate, the bend-broken peripheral edge of the glass plate is ground by the grinding head device.

In accordance with the present invention, it is possible to provide a glass-plate working apparatus which is capable of overcoming the conventional problems, makes it possible to manufacture a glass plate of a configuration as programmed, excels in the response characteristic, and is capable of fabricating glass plates of given configurations with high productivity.

Hereafter, a detailed description will be given of the present invention on the basis of a preferred embodiment illustrated in the drawings. It should be noted that the present invention is not limited to such an embodiment.

### BRIEF DESCRIPTION OF THE DRAWINGS

Fig. 1 is a front elevational view of a preferred embodiment of the present invention;
Fig. 2 is a partially cutaway plan view of the embodiment shown in Fig. 1;
Fig. 3 is an explanatory plan view of a glass plate bend-breaking section of the embodiment shown in Fig. 1;
Fig. 4 is an explanatory side elevational view of the glass plate bend-breaking section of the embodiment shown in Fig. 1; and
Fig. 5 is an explanatory plan view of a glass plate peripheral-edge grinding section of the embodiment shown in Fig. 1.

### EMBODIMENT

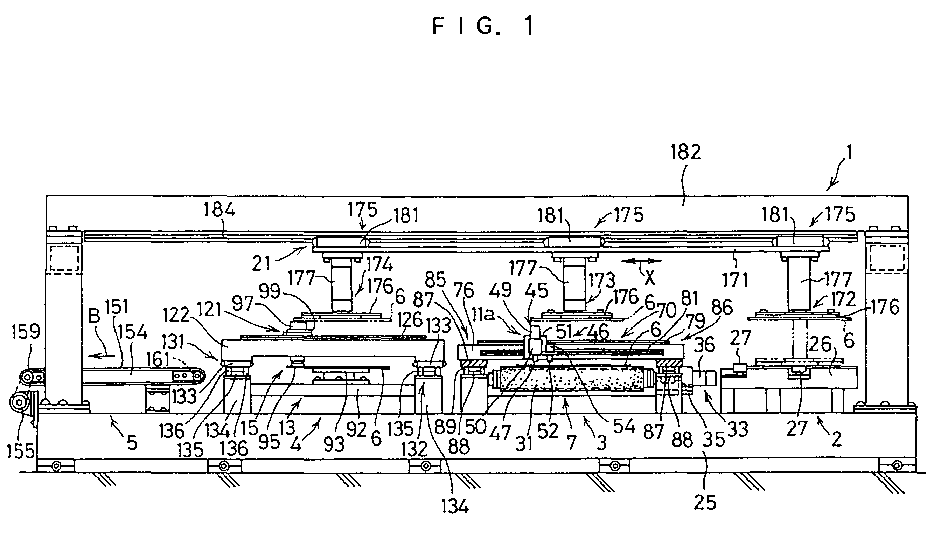

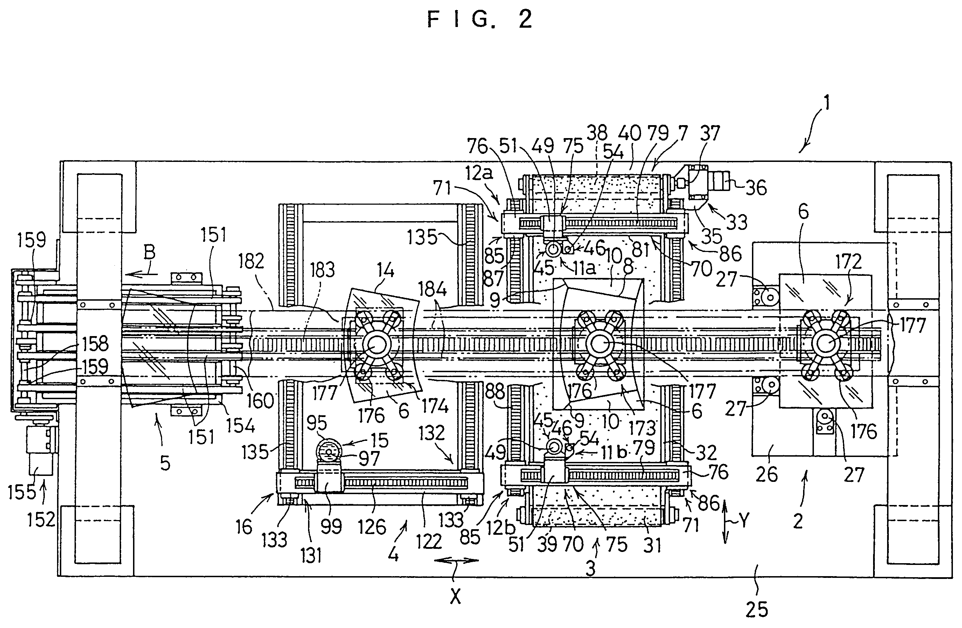

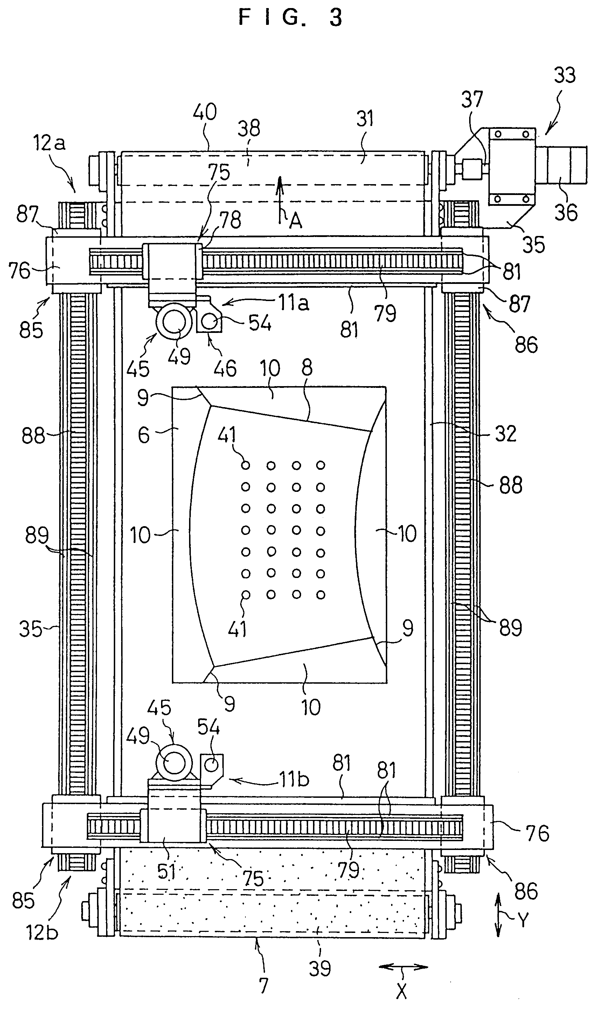

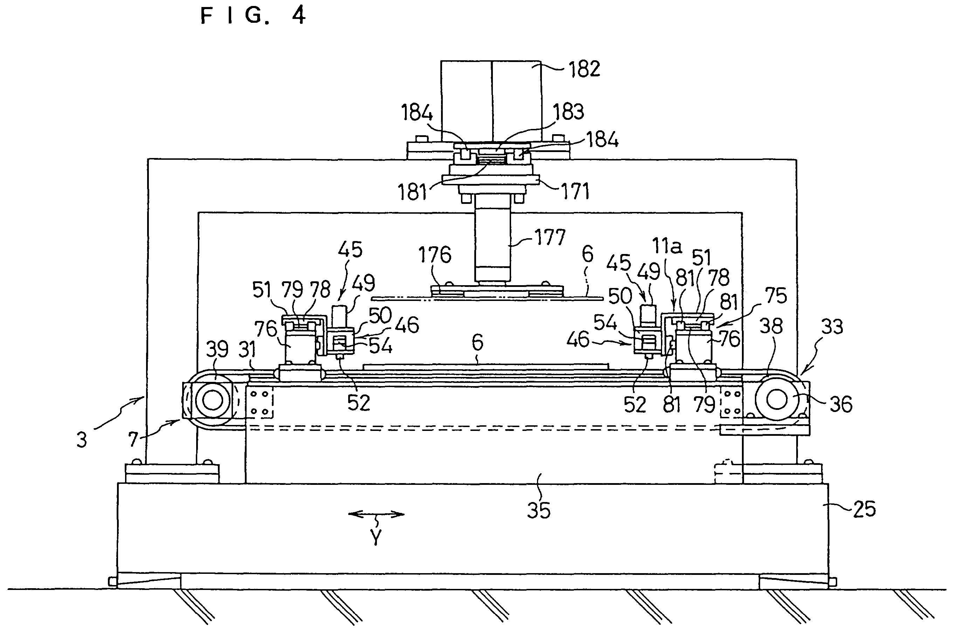

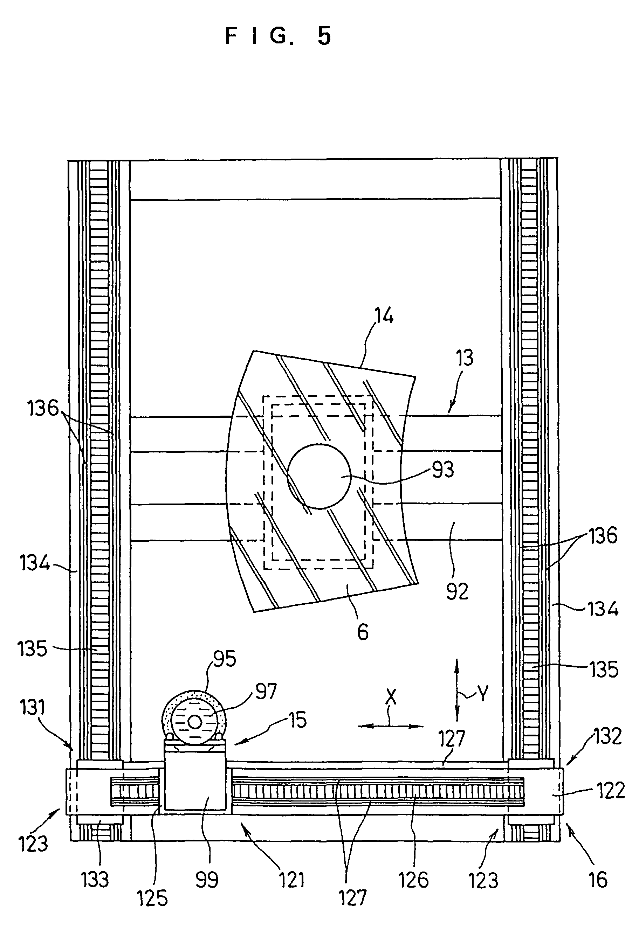

In Figs. 1 to 5, a glass-plate working apparatus 1 in accordance with this embodiment comprises a glass plate carrying-in section 2; a glass plate bend-breaking section 3 disposed in proximity to the glass plate carrying-in section 2; a glass plate peripheral-edge grinding section 4 disposed in proximity to the glass plate bend-breaking section 3; and a glass plate carrying-out section 5 disposed in proximity to the glass plate peripheral-edge grinding section 4.

The glass plate carrying-in section 2 has, among others, a supporting base 26 attached to a base 25 as well as rollers 27 which are rotatably attached to the supporting base 26 so as to position the glass plate 6 which is placed on the supporting base 26.

The glass plate bend-breaking section 3 is provided with a supporting device 7 for supporting a glass plate 6 which is unworked plate glass from the glass plate carrying-in section 2; a pair of bend-breaking head devices 11a and 11b for forming main cut lines 8 for bend-breaking and edge cut lines 9 on the glass plate 6 supported by the supporting device 7, and for pressing predetermined positions 10, 10, ... on the glass plate 6 on which the cut lines 8 and 9 have been formed, so as to bend-break the glass plate 6; and bend-breaking head moving devices 12a and 12b for relatively moving the bend-breaking head devices 11a and 11b with respect to the glass plate 6 supported by the supporting device 7, in correspondence with the main cut lines 8 and the edge cut lines 9, which are to be formed, for bend-breaking as well as the predetermined positions 10, 10, ... on the glass plate 6 to be pressed.

The glass plate peripheral-edge grinding section 4 is provided with a supporting device 13 for supporting the glass plate 6 from the glass plate bend-breading section 3; a grinding head device 15 for grinding a bend-broken edge 14 of the glass plate 6 supported by the supporting device 13; and a grinding-head moving device 16 for relatively moving the grinding head device 15 with respect to the glass plate 6 supported by the supporting device 13, in correspondence with the bend-broken edge 14 of the glass plate 6 to be ground.

The glass-plate working apparatus 1 is further provided with a transporting device 21 for transporting the glass plate 6, which is to be processed or has been processed, from the glass plate carrying-in section 2 to the supporting device 7, from the supporting device 7 to the supporting device 13, and from the supporting device 13 to the glass plate carrying-out section 5, respectively.

The supporting device 7 is provided with a flexible endless belt 31, a plate-like supporting member 32 for supporting the endless belt 31 on the reverse surface thereof, and a traveling device 33 for causing the endless belt 31 to travel. The traveling device 33 is provided with an electric motor 36 mounted on a frame 35, a driving drum 38 connected to an output rotating shaft 37 of the electric motor 36 and rotatably supported by the frame 35, and a driven drum 39 rotatably supported by the frame 35. The endless belt 31 is trained between the driving drum 38 and the driven drum 39. The frame 35 is supported by the base 25. In the supporting device 7 in which the glass plate 6 subject to bend-breaking is placed on the endless belt 31, after completion of one bend-breaking operation, if the endless belt 31 is made to travel in the direction of arrow A by the rotation of the output rotating shaft 37 due to the operation of the electric motor 36, bend-broken scrap (cullet) remaining on the endless belt 31 is discharged from one end side 40 of the supporting device 7. As a result, after the completion of one bend-breaking operation, the bend-broken scrap is discharged into an unillustrated bend-broken-scrap storing box.

It should be noted that a multiplicity of through holes 41 are formed at predetermined positions in the endless belt 31, and the through holes 41 are connected with a vacuum suction device via slits (not shown) formed in the supporting member 32, so that the glass plate 6 placed on the endless belts 31 is adapted to be sucked and fixed at the through holes 41 by the operation of the vacuum suction device.

The bend-breaking head devices 11a and 11b are formed in a mutually similar manner, so that a description will be hereafter given of the bend-breaking head device 11a. The bend-breaking head device 11a is provided with a cutter device 45 for forming the main cut line 8 and the edge cut line 9, as well as a press-breaking device 46 for press-breaking the glass plate 6. The cutter device 45 is provided with a cutter wheel 47, a pneumatic cylinder unit 49 having a piston rod with the cutter wheel 47 attached to a distal end thereof, and a blade orienting device 50 constituted by an electric motor and the like for orienting a blade of the cutter wheel 47 in a cut-line forming direction by rotating the piston rod of the pneumatic cylinder unit 49. The cutter device 45, the pneumatic cylinder unit 49, and the blade orienting device 50 are mounted on a movable base 51 by means of an adjusting mechanism for adjusting the initial position of the cutter wheel 47 in the X - Y direction. The press-breaking device 46 is provided with a pressing member 52 and a pneumatic cylinder unit 54 having a piston rod with the pressing member 52 attached to a distal end thereof. The pneumatic cylinder unit 54 is mounted on the movable base 51 by means of a bracket.

When the pneumatic cylinder unit 49 of the cutter device 45 is actuated, and its piston rod is hence extended, the cutter wheel 47 is pressed against the glass plate 6 placed on the endless belt 31, thereby forming the main cut line 8 and the edge cut line 9. When the pneumatic cylinder unit 54 of the press-breaking device 46 is actuated, and its piston rod is hence extended, the pressing member 52 is pressed against the positions 10, 10, ... on the glass plate 6 placed on the endless belt 31, thereby slightly straining the glass plate 6 and bend-breaking the glass plate 6 along the cut lines 8 and 9. The bend-breaking head devices 11a and 11b individually effect the formation of the cut lines 8 and 9 and the pressing of the positions 10, 10, ... on the glass plate 6.

It should be noted that although, in this embodiment, the pair of bend-breaking head devices 11a and 11b are provided to individually effect the formation of the cut lines 8 and 9 and the pressing of the positions 10, 10, ... on the glass plate 6, these operations may be effected only by either one of the bend-breaking head devices 11a and 11b. Still alternatively, the formation of the cut lines 8 may be effected by one of the bend-breaking head devices 11a and 11b, and the formation of the cut lines 9 and the pressing of the positions 10, 10, ... on the glass plate 6 may be effected by the coaction of the bend-breaking head devices 11a and 11b.

The bend-breaking head moving devices 12a and 12b are provided in correspondence with the bend-breaking head device 11a and the bend-breaking head device 11b, respectively, the bend-breaking head moving device 12a being adapted to move the bend-breaking head device 11a within an X - Y plane and the bend-breaking head moving device 12b being adapted to move the bend-breaking head device 11b within the X - Y plane. The bend-breaking head moving devices 12a and 12b are formed in a mutually similar manner, so that a description will be hereafter given of the bend-breaking head moving device 12a. The bend-breaking head moving device 12a is provided with an X-direction linear motor means 70 for moving the bend-breaking head device 11a in the X direction and a Y-direction linear motor means 71 for moving the bend-breaking head device 11a in the Y direction. The X-direction linear motor means 70 is constituted by an X-direction linear motor 75 for a bend-breaking head device for moving the movable base 51 with the bend-breaking head device 11a mounted thereon in the X direction. The Y-direction linear motor means 71 is provided with a pair of Y-direction linear motors 85 and 86 which are respectively disposed at opposite ends of a movable base 76, so as to move the movable base 76 with the X-direction linear motor 75 mounted thereon in the Y direction.

The X-direction linear motor 75 is provided with a movable element 78 mounted on the movable base 51 as well as a stator 79 fixed on the movable base 76 in such a manner as to extend in the X direction, and is adapted to move the movable base 51 in the X direction when a controlled current is supplied to the movable element 78, thereby moving the bend-breaking head device 11 mounted on the movable base 51 in the X direction. The movable base 76 is provided with a pair of guide rails 81 extending in the X direction, and the movable base 51 and the movable element 78 which are slidably fitted to the guide rails 81 are moved in the X direction while being guided by the guide rails 81.

The Y-direction linear motors 85 and 86 are arranged in such a manner as to be actuated in synchronism with each other. The Y-direction linear motors 85 and 86 are arranged in a mutually similar manner, so that a description will be hereafter given of the Y-direction linear motor 85. The Y-direction linear motor 85 is provided with a movable element 87 mounted on the underside of the movable base 76 at one end thereof as well as a stator 88 fixed on the frame 35 in such a manner as to extend in the Y direction, and is adapted to move the movable base 76 in the Y direction when a controlled current is supplied to the movable element 87, thereby moving in the Y direction the bend-breaking head device 11a mounted on the movable base 76 via the movable base 51. The frame 35 is provided with a pair of guide rails 89 extending in the Y direction, and the movable element 87 fitted slidably to the guide rails 89 is moved in the Y direction while being guided by the guide rails 89. It should be noted that the stator 88 is also used as a stator for the Y-direction linear motor means 71 of the bend-breaking head moving device 12b.

The supporting device 13 has a frame 92 and a vacuum sucking unit 93 provided on the frame 92, and sucks, supports, and fixes the glass plate 6 from the glass plate bend-breaking section 3 by means of the vacuum sucking unit 93 during the grinding and polishing of its bend-broken edge 14. The frame 92 is supported by the base 25.

The grinding head device 15 is provided with a grinding wheel 95 and an electric motor 97 having an output rotating shaft to a lower end of which the grinding wheel 95 is secured so as to rotate the grinding wheel 95. The electric motor 97 is mounted on a movable base 99 by means of an adjusting mechanism for adjusting the initial position of the grinding wheel 95. As the grinding wheel 95 is rotated due to the operation of the electric motor 97, the grinding head device 15 grinds and polishes the bend-broken edge 14 of the glass plate 6.

The grinding-head moving device 16 is provided with an X-direction linear motor means 121 for a grinding head device for moving the movable base 99 with the grinding head device 15 mounted thereon in the X direction, as well as a Y-direction linear motor means 123 for a grinding head device for moving in the Y direction a movable base 122 with the X-direction linear motor means 121 for a grinding head device mounted thereon. The X-direction linear motor means 121 is provided with a movable element 125 mounted on the movable base 99 as well as a stator 126 fixed on the movable base 122 in such a manner as to extend in the X direction, and is adapted to move the movable base 99 in the X direction when a controlled current is supplied to the movable element 125, thereby moving the grinding head device 15 mounted on the movable base 99 in the X direction. The movable base 122 is provided with a pair of guide rails 127 extending in the X direction, and the movable base 99 and the movable element 125 which are slidably fitted to the guide rails 127 are moved in the X direction while being guided by the guide rails 127.

The Y-direction linear motor means 123 is provided with a pair of Y-direction linear motors 131 and 132 which are respectively provided at opposite ends of the movable base 122, and the Y-direction linear motors 131 and 132 are arranged in such a manner as to be actuated in synchronism with each other. The Y-direction linear motors 131 and 132 are arranged in a mutually similar manner, so that a description will be hereafter given of the Y-direction linear motor 131. The Y-direction linear motor 131 is provided with a movable element 133 mounted on the underside of the movable base 121 at one end thereof as well as a stator 135 fixed on the frame 134 in such a manner as to extend in the Y direction, and is adapted to move the movable base 121 in the Y direction when a controlled current is supplied to the movable element 133, thereby moving in the Y direction the grinding head device 15 mounted on the movable base 122 via the movable base 99. The frame 134 supported by the base 25 is provided with a pair of guide rails 136 extending in the Y direction, and the movable element 133 fitted slidably to the guide rails 136 is moved in the Y direction while being guided by the guide rails 136.

The glass plate carrying-out section 5 is provided with a plurality of flexible endless narrow belts 151 disposed in parallel to each other and a traveling device 152 for causing the endless belts 151 to travel. The traveling device 152 is provided with an electric motor 155 mounted on the base 25; a plurality of drive rollers 159 connected to an output rotating shaft of the electric motor 155 via a pulley, a belt and the like and rotatably supported on a frame 154 by means of a shaft 158; and a plurality of driven rollers 161 rotatably supported on the frame 154 by means of a shaft 160. The endless narrow belts 151 are trained between the drive rollers 159 and the driven rollers 161. As for the glass plate carrying-out section 5, as the electric motor 155 is operated, and its output rotating shaft is rotated, the shaft 158 is rotated so as to move the endless narrow belts 151 in the B direction, thereby carrying out the glass plate 6 placed on the endless narrow belts 151 from the glass plate peripheral-edge grinding section 4 in the B direction.

The transporting device 21 is provided with a movable base 171, three lifting devices 172, 173, and 174 mounted on the base 171, and a linear motor 175 for moving the movable base 171 in the X direction. Each of the lifting devices 172, 173, and 174 has a vacuum suction head 176 for sucking and holding the glass plate 6 under a vacuum as well as a pneumatic cylinder unit 177 having a piston rod with the vacuum suction head 176 attached to a distal end thereof, so as to raise and lower the vacuum suction head 176 when the pneumatic cylinder unit 177 is actuated. The linear motor 175 has a movable element 181 mounted on the movable base 171 as well as a stator 183 mounted on the underside of an upper fame 182, which is supported by the base 25, in such a manner as to extend in the X direction. The movable element 181 is fitted to a pair of guide rails 184 which is mounted on the underside of the upper frame 182 in such a manner as to extend in the X direction in parallel to each other, the movable element 181 being movable in the X direction.

As a controlled electric current is supplied to the movable element 181, the linear motor 175 moves the movable base in the X direction, thereby moving the lifting devices 172, 173, and 174 mounted on the movable base 171 in the X direction. As a result of the movement in the X direction of the lifting devices 172, 173, and 174 by the linear motor 175 and the sucking, holding, and lifting of the glass plate 6 by the lifting devices 172, 173, and 174, the glass plate 6 supplied onto the supporting base 26 is transported onto the endless belt 31, the bend-broken glass plate 6 on the endless belt 31 is transported onto the vacuum sucking unit 93, and the glass plate 6 whose edges 14 on the vacuum sucking unit 93 have been ground and polished is transported onto the endless narrow belts 151. The placing onto the endless belt 31 of the glass plate 6 supplied onto the supporting base 26 is effected by the lifting device 172, the placing onto the vacuum sucking unit 93 of the bend-broken glass plate 6 on the endless belt 31 is effected by the lifting device 173, and the placing onto the endless narrow belts 151 of the glass plate 6 whose edges 14 on the vacuum sucking unit 93 have been ground and polished is effected by the lifting device 174.

It should be noted that the glass-plate working apparatus 1 is provided with a numerical controller in addition to the above-described devices. The numerical controller controls the above-described operation and the operation which will be described below, by a program which has been stored in advance.

The glass plate 6 is first positioned and placed on the supporting base 26 of the glass plate carrying-in section 2 by means of the rollers 27 and the like. As a result of the reciprocating motion in the X direction of the movable base 171 of the transporting device 21, the glass plate 6 placed on the supporting base 26 is transported onto the endless belt 31, the bend-broken glass plate 6 on the endless belt 31 is transported onto the vacuum sucking unit 93, and the glass plate 6 whose edges 14 on the vacuum sucking unit 93 have been ground and polished is transported onto the endless narrow belts 151.

In the glass plate bend-breaking section 3, the bend-breaking head devices 11a and 11b actuate the pneumatic cylinder units 49 to press the cutter wheels 47 against the glass plate 6 placed on the endless belt 31. In the state in which the cutter wheels 47 are pressed against the glass plate 6, the bend-breaking head moving devices 12a and 12b move the bend-breaking head devices 11a and 11b in the X and Y directions by means of the X-direction linear motor means 75 and the Y-direction linear motor means 71, respectively. Consequently, the preprogrammed main cut lines 8 are formed on the glass plate 6 placed on the endless belt 31 by means of the cutter wheels 47. After the formation of the main cut lines 8, the preprogrammed edge cut lines 9 are formed on the glass plate 6 placed on the endless belt 31 by the cutter wheel 47 by the raising and lowering of the cutter wheels 47 due to the actuation of the pneumatic cylinder units 49, and by the movement of the bend-breaking head devices 11a and 11b in the X and Y directions due to the operation of the X-direction linear motor means 75 and the Y-direction linear motor means 71.

After the formation of the edge cut lines 9, the pressing members 52 are pressed against the preprogrammed positions 10, 10, ... on the glass plate 6 placed on the endless belt 31 by the projection and retraction of the pressing members 52 due to the actuation of the pneumatic cylinder units 54, and by the movement of the bend-breaking head devices 11a and 11b in the X and Y directions due to the operation of the X-direction linear motor means 75 and the Y-direction linear motor means 71. Consequently, the glass plate 6 placed on the endless belt 31 is slightly strained, and is bend-broken along the cut lines 8 and 9. During the formation of the cut lines 8 and 9, the blades of the cutter wheels 47 are oriented in the directions in which the main cut lines 8 and the edge cut lines 9 are formed. Incidentally, an arrangement may be provided such that after the formation of parts of the main cut lines 8, the edge cut lines 9 which continue from the same are then formed, and this procedure is subsequently repeated, thereby forming the whole of the main cut lines 8 and the edge cut lines 9. Further, an arrangement may be provided such that the formation of the main cut lines 8 is effected by the bend-breaking head moving device 12a, and the formation of the edge cut lines 9 and the bend-breaking are effected by the bend-breaking head moving device 12b.

In the glass plate peripheral-edge grinding section 4, the vacuum sucking unit 93 sucks under a vacuum and fixes the glass plate 6 from the glass plate bend-breaking section 3, and the grinding head device 15 operates the electric motor 97 to rotate the grinding wheel 95. In the state in which the grinding wheel 95 is rotating, the grinding-head moving device 16 moves the grinding head device 15 in the X and Y directions by means of the X-direction linear motor means 121 and the Y-direction linear motor means 123. Consequently, the bend-broken edges 14 of the glass plate 6 fixed on the vacuum sucking unit 93 are subjected to preprogrammed grinding and polishing by the grinding wheel 95.

After the completion of the operation of bend-breaking the glass plate 6 in the glass plate bend-breaking section 3 and the operation of grinding and polishing the bend-broken edge 14 in the glass plate peripheral-edge grinding section 4, the transporting device 21 is operated again, and the glass plate 6 subject to bend-breaking and the glass plate 6 subject to grinding and polishing are newly transported onto the endless belt 31 and the sucking unit 93, respectively. During the operation of the transporting device 21, as the endless belt 31 travels due to the operation of the electric motor 36, the bend-broken scrap (cullet) remaining on the endless belt 31 is sent toward one end side 40 of the supporting device 7, and is discharged into the bend-broken-scrap storing box.

As described above, in accordance with the glass-plate working apparatus 1, since the bend-breaking head moving devices 12a and 12b are constituted by the X-direction linear motor means 75 and the Y-direction linear motor means 71, and the grinding-head moving device 16 is constituted by the X-direction linear motor means 121 and the Y-direction linear motor means 123, vibrations and the like are difficult to occur even if the bend-breaking head devices 11a and 11b and the grinding head device 15 are moved at high speed. For this reason, the bend-breaking head devices 11a and 11b and the grinding head device 15 can be moved accurately as desired. The same also applies to a case where the stators 79, 88, 126, and 135 are elongated, and even a large glass plate 6 can be worked accurately at high speed.

## Claims

1. A glass-plate working apparatus comprising: a glass plate carrying-in section;
a glass plate bend-breaking section disposed in proximity to said glass plate carrying-in section;
a glass plate peripheral-edge grinding section disposed in proximity to said glass plate bend-breaking section; and
a glass plate carrying-out section disposed in proximity to the glass plate peripheral-edge grinding section,
wherein said glass plate bend-breaking section is provided with a supporting device for supporting a glass plate from said glass plate carrying-in section; at least one bend-breaking head device for forming a cut line for bend-breaking on the glass plate supported by said supporting device, and for pressing a predetermined position on the glass plate on which the cut line has been formed, so as to bend-break the glass plate; and a bend-breaking head moving device for relatively moving said bend-breaking head device with respect to the glass plate supported by said supporting device, in correspondence with the cut line for bend-breaking to be formed as well as the predetermined position on the glass plate to be pressed,
wherein said glass plate peripheral-edge grinding section is provided with a supporting device for supporting the glass plate from said glass plate bend-breading section; at least one grinding head device for grinding a bend-broken edge of the glass plate supported by said supporting device of said glass plate peripheral-edge grinding section; and a grinding-head moving device for relatively moving said grinding head device with respect to the glass plate supported by said supporting device of said glass plate peripheral-edge grinding section, in correspondence with the bend-broken edge of the glass plate to be ground,
wherein said bend-breaking head moving device is provided with X-direction linear motor means for a bend-breaking head device for moving said bend-breaking head device in an X direction and Y-direction linear motor means for a bend-breaking head device for moving said bend-breaking head device in a Y direction, and
wherein said grinding-head moving device is provided with X-direction linear motor means for a grinding head device for moving said grinding head device in the X direction and Y-direction linear motor means for a grinding head device for moving said grinding head device in the Y direction.

2. A glass-plate working apparatus according to claim 1, wherein said X-direction linear motor means for a bend-breaking head device is provided with an X-direction linear motor for moving in the X direction a movable base with said bend-breaking head device mounted thereon, and said Y-direction linear motor means for a bend-breaking head device is provided with a pair of Y-direction linear motors which are respectively disposed at opposite ends of a movable base with said X-direction linear motor mounted thereon, said pair of Y-direction linear motors being arranged to be operated in synchronism with each other.

3. A glass-plate working apparatus according to claim 1 or 2, wherein said X-direction linear motor means for a grinding head device is provided with an X-direction linear motor for moving in the X direction a movable base with said grinding head device mounted thereon, and said Y-direction linear motor means for a grinding head device is provided with a pair of Y-direction linear motors which are respectively disposed at opposite ends of a movable base with said X-direction linear motor mounted thereon, said pair of Y-direction linear motors being arranged to be operated in synchronism with each other.

4. A glass-plate working apparatus according to any one of claims 1 to 3, further comprising: a transporting device for transporting the glass plate from said glass plate carrying-in section to said supporting device of said glass plate bend-breaking section, from said supporting device of said glass plate bend-breaking section to said supporting device of said glass plate peripheral-edge grinding section, and from said supporting device of said glass plate peripheral-edge grinding section to said glass plate carrying-out section, respectively, wherein said transporting device is provided with lifting devices for lifting the glass plate from respective said supporting devices of said glass plate carrying-in section, said glass plate bend-breaking section, and said glass plate peripheral-edge grinding section, as well as linear motor means for moving a movable base on which said lifting devices are mounted.

5. A glass-plate working apparatus according to any one of claims 1 to 4, wherein said bend-breaking head device is provided with a cutter device for forming a main cut line and an edge cut line, as well as a press-breaking device for press-breaking the glass plate.

6. A glass-plate working apparatus comprising:
a glass plate bend-breaking section to which a glass subject to bend-breaking is supplied,
wherein said glass plate bend-breaking section is provided with a supporting device for supporting the glass plate supplied; at least a pair of bend-breaking head devices for forming a cut line for bend-breaking on the glass plate supported by said supporting device, and for pressing a predetermined position on the glass plate on which the cut line has been formed, so as to bend-break the glass plate; and a bend-breaking head moving device for relatively moving each said bend-breaking head device with respect to the glass plate supported by said supporting device, in correspondence with the cut line for bend-breaking to be formed as well as the predetermined position on the glass plate to be pressed, and
wherein said bend-breaking head moving device is provided with X-direction linear motor means for a bend-breaking head device for moving each said bend-breaking head device in an X direction and Y-direction linear motor means for a bend-breaking head device for moving each said bend-breaking head device in a Y direction.

7. A glass-plate working apparatus according to claim 6, wherein said X-direction linear motor means for each bend-breaking head device is provided with an X-direction linear motor for moving in the X direction a movable base with said bend-breaking head device mounted thereon, and said Y-direction linear motor means for each bend-breaking head device is provided with a pair of Y-direction linear motors which are respectively disposed at opposite ends of a movable base with said X-direction linear motor mounted thereon, said pair of Y-direction linear motors being arranged to be operated in synchronism with each other.

8. A glass-plate working apparatus according to claim 6 or 7, wherein each said bend-breaking head device is provided with a cutter device for forming a cut line, as well as a press-breaking device for press-breaking the glass plate.

9. A glass-plate working apparatus according to any one of claims 6 to 8, wherein one of said bend-breaking head devices is arranged to cut a main cut line, and both bend-breaking head devices are arranged to form edge cut lines and bend-break the glass plate on which the main cut line and the edge cut lines have been formed.
